# EUROPÄISCHE PATENTSCHRIFT

(11) **EP 0 838 263 B1**
(45) Veröffentlichungstag und Bekanntmachung des Hinweises auf die Patenterteilung: **08.01.2003**
(21) Anmeldenummer: 97117674.8
(22) Anmeldetag: 13.10.1997
(51) Int. Cl.: B01J 39/20, C08F 8/36

(54) **Verfahren zur Herstellung ausblutarmer Kationenaustauscher**
Process for manufacturing reduced bleed cation exchangers
Procédé de préparation d'échangeurs de cations à faible exsudation

(30) Priorität: 24.10.1996 DE 19644227
(43) Veröffentlichungstag der Anmeldung: 29.04.1998
(73) Patentinhaber: BAYER AG, 51368 Leverkusen (DE)
(72) Erfinder: Klipper, Reinhold Maria, Dr., 50933 Köln (DE); Wagner, Rudolf, Dr., 51061 Köln (DE); Halle, Olaf, Dr., 51061 Köln (DE); Rall, Klaus, Dr., 51061 Köln (DE); Lütjens, Holger, Dr., 51065 Köln (DE)

(56) Entgegenhaltungen:
- EP-A- 0 009 395
- EP-A- 0 361 685
- DE-A- 19 644 217
- DE-B- 1 227 431
- US-A- 2 500 149
- US-A- 2 597 438
- US-A- 2 953 532
- US-A- 3 218 301
- US-A- 3 238 153
- CHEMICAL ABSTRACTS, vol. 125, no. 4, 22.Juli 1996 Columbus, Ohio, US; abstract no. 35413p, WATARU: "STRONGLY ACIDIC CATIONIC EXCHANGE RESINS" Seite 98; Spalte 1; XP002055200

## Beschreibung

Die Erfindung betrifft ein Verfahren zur Herstellung stark saurer Kationenaustauscher mit einer verminderten Neigung, Verunreinigungen an ihre Umgebung abzugeben.

Für Kationenaustauscher gibt es heute eine Vielzahl interessanter Anwendungen. So werden sie beispielsweise bei der Trinkwasseraufbereitung, bei der Herstellung von Reinstwasser (notwendig bei der Mikrochip-Herstellung für die Computer-Industrie), zur chromatographischen Trennung von Glucose und Fructose und als Katalysatoren für die verschiedensten chemischen Reaktionen (wie z.B. bei der Bisphenol-A-Herstellung aus Phenol und Aceton) eingesetzt. Für die meisten dieser Anwendungen ist erwünscht, daß die Kationenaustauscher zwar die ihnen zugedachte Aufgabe erfüllen, aber Verunreinigungen, die von ihrer Herstellung herrühren können oder während des Gebrauchs durch Polymerabbau entstehen, gar nicht oder in möglichst geringen Mengen an ihre Umgebung abgeben.

In der Vergangenheit hat man versucht, das Problem dadurch zu lösen, daß man die Ionenaustauscher mit Antioxidantien behandelt (EP-A-366 258) oder chemisch modifiziert (US-A-3 342 755 und EP-A-502 619). Diese Maßnahmen können zwar den Polymerabbau vermindern, haben aber keinen Einfluß auf die Bestandteile, die bei der Ionenaustauscherherstellung entstehen - seien es nicht umgesetzte Ausgangsmaterialien oder niedermolekulare unvemetzte Polymere. Diese Verunreinigungen versucht man durch wiederholtes Auswaschen mit Wasser zu entfernen, was aufwendig ist und nur Teilerfolge bringt.

In EP-A 0 009 395 wird ein Sulfonierungsprozess beschrieben, der auf Basis eines sulfonierten Coagulums durchgeführt wird, wobei die entsprechenden Harze einen Teilchendurchmesser von 0,01 bis 1,5 Mirkometer und 0,7 bis 1,5 Kationenaustauschende funktionelle Gruppen pro Monomereinheit aufweisen. Die Sulfonierung erfolgt bei 120°C unter Stickstoff.

In EP-A 0 361 685 wird ein spezielles Sulfonierungsverfahren offenbart, wo gezielt 68 % bis 98 % der zu funktionalisierenden Einheiten bei 120°C oder 140°C mit Schwefelsäure sulfoniert werden.

US-A 2 500 149 offenbart die Sulfonierung Benzol-quellbarer Copolymere von Vinyl-aromatischen Kohlenwasserstoffen bei Temperaturen von 100°C bis 200°C.

US-A 3 218 301 beschreibt die Sulfonierung von Polymeren mittels eines SO₃/Luft-Gemisches unter Zugabe von Inertgas bei 80 bis 100°C.

US-A 2 953 532 offenbart die Synthese von Kationenaustauschern durch Sulfonieren eines vernetzerfreien Polystyrols mittels Chlorsulfonsäure bei 100°C bis 120°C oder mittels Oleum bei 120-130°C.

Schließlich offentbart US-A 3 238 153 ein Verfahren zur Herstellung stark saurer Kationenaustauscher mittels Schwefelsäure und Phopshorpentoxid bei 100 bis 180°C.

Aufgabe der Erfindung war also das Bereitstellen einer Methode zur Herstellung von Ionenaustauschern, die ausblutende Verunreinigungen von vornherein in stark vermindertem Maß enthalten. Überraschenderweise wurde nun gefunden, daß diese Aufgabe durch Sulfonierung des unfunktionalisierten Polymerisats in Anwesenheit eines Quellmittels bei hoher Temperatur und durch Sulfonierung unter Luft (Sauerstoff) ausschluß gelöst wird.

Gegenstand der Erfindung ist also ein Verfahren zur Herstellung stark saurer Kationenaustauscher durch Sulfonierung vernetzter Styrolpolymerisate bei erhöhter Temperatur, dadurch gekennzeichnet, daß man die Sulfonierung in Anwesenheit eines Quellmittels bei Temperaturen von 120 bis 200, vorzugsweise 130 bis 145°C und in Abwesenheit von Luft (Sauerstoff) durchführt. Die Begriffe "Ionenaustauscher" bzw. "Kationenaustauscher" im Sinne dieser Erfindung umfassen auch sulfonierte Harze, die nicht zum Zweck des Ionenaustauschers, sondern als saure Katalysatoren eingesetzt werden.

Als Basispolymerisat dient ein vernetztes Polymerisat ethylenisch einfach ungesättigter Monomerer, die zum überwiegenden Teil aus mindestens einer Verbindung der Reihe Styrol, Vinyltoluol, Ethylstyrol, α-Methylstyrol und deren kernhalogenierte Derivate wie Chlorstyrol bestehen; sie können daneben auch eine oder mehrere Verbindungen aus der Reihe Vinylbenzylchlorid, Acrylsäure, ihre Salze und ihre Ester, insbesondere ihren Methylester, ferner Vinylnaphthaline, Vinylxylole und die Nitrile und Amide von Acryl- und Methacrylsäuren enthalten.

Die Polymerisate sind vernetzt - vorzugsweise durch Copolymerisation mit vernetzenden Monomeren mit mehr als einer, vorzugsweise mit 2 oder 3, copolymerisierbaren C=C-Doppelbindung(en) pro Molekül. Solche vernetzenden Monomeren umfassen beispielsweise polyfunktionelle Vinylaromaten wie Di- und Trivinylbenzole, Divinylethylbenzol, Divinyltoluol, Divinylxylol, Divinylethylbenzol, Divinylnaphthalin, polyfunktionelle Allylaromaten wie Di- und Triallylbenzole, polyfunktionelle Vinyl- und Allylheterocyclen wie Trivinyl- und Triallylcyanurat und -isocyanurat, N,N'-C₁-C₆-Alkylendiacrylamide und -dimethacrylamide wie N,N'-Methylendiacrylamid und -dimethacrylamid, N,N'-Ethylendiacrylamid und -dimethacrylamid, Polyvinyl- und Polyallylether gesättigter C₂-C₂₀-Polyole mit 2 bis 4 OH-Gruppen pro Molekül, wie z.B. Ethylenglykoldivinyl- und -diallylether und Diethylenglykoldivinyl- und -diallylether, Ester ungesättigter C₃-C₁₂-Alkohole oder gesättigter C₂-C₂₀-Polyole mit 2 bis 4 OH-Gruppen pro Molekül wie Allylmethacrylat, Ethylenglykoldi(meth)acrylat, Glycerintri(meth)acrylat, Pentaerythrittetra(meth)acrylat, Divinylethylenharnstoff, Divinylpropylenharnstoff, Divinyladipat, aliphatische und cycloaliphatische Olefine mit 2 oder 3 isolierten C=C-Doppelbindungen wie Hexadien-1,5, 2,5-Dimethylhexadien-1,5, Octadien-1,7, 1,2,4-Trivinylcyclohexan. Als vernetzende Monomere haben sich Divinylbenzol (als Isomerengemisch) sowie Mischungen aus Divinylbenzol und aliphatischen C₆-C₁₂-Kohlenwasserstoffen mit 2 oder 3 C=C-Doppelbindungen besonders bewährt. Die vernetzenden Monomeren werden im allgemeinen in Mengen von 1 bis 80 Gew.-%, vorzugsweise 2 bis 25 Gew.-%, bezogen auf die Gesamtmenge der eingesetzten polymerisierbaren Monomeren, eingesetzt.

Die vernetzenden Monomeren müssen nicht in reiner Form, sondern können auch in Form ihrer technisch gehandelten Mischungen minderer Reinheit (wie z.B. Divinylbenzol in Mischung mit Ethylstyrol) eingesetzt werden.

Die Copolymerisation von Monomer und Vernetzer wird üblicherweise durch Radikalbildner initiiert, die monomerlöslich sind. Bevorzugte radikalbildende Katalyatoren umfassen beispielsweise Diacylperoxide wie Diacetylperoxid, Dibenzoylperoxid, Di-p-chlorbenzoylperoxid, Lauroylperoxid, Peroxyester wie tert.-Butylperoxyacetat, tert.-Butylperoctoat, tert.-Butylperoxypivalat, tert.-Butylperoxy-2-ethylhexanoat, tert.-Butylperoxybenzoat, Dicyclohexylperoxydicarbonat, Alkylperoxide wie Bis-(tert.-butylperoxybutan), Dicumylperoxid, tert.-Butylcumylperoxid, Hydroperoxide wie Cumolhydroperoxid, tert.-Butylhydroperoxid, Ketonperoxide wie Cyclohexanon-hydroperoxid, Methylethylketonhydroperoxid, Acetylacetonperoxid oder - vorzugsweise - Azoisobutyrodinitril.

Die Radikalbildner können in katalytischen Mengen, d.h. vorzugsweise 0,01 bis 2,5, insbesondere 0,12 bis 1,5 Gew.-%, bezogen auf die Summe von Monomer und Vernetzer, eingesetzt werden

Die Herstellung der vernetzten Basispolymerisate kann nach bekannten Methoden der Suspensionspolymerisation erfolgen; vgl. Ullmann's Encyclopedia of Industrial Chemistry, 5th ed., Vol. A21, 363-373, VCH Verlagsgesellschaft mbH, Weinheim 1992. Die wasserunlösliche Monomer/Vernetzer-Mischung wird einer wäßrigen Phase zugesetzt, die vorzugsweise zur Stabilisierung der Monomer/Vernetzer-Tröpfchen der dispersen Phase und der daraus entstehenden Perlpolymerisate mindestens ein Schutzkolloid enthält. Als Schutzkolloide sind natürliche und synthetische wasserlösliche Polymere, wie z.B. Gelatine, Stärke, Polyvinylalkohol, Polyvinylpyrrolidon, Polyacrylsäure, Polymethacrylsäure und Copolymerisate aus (Meth)acrylsäure und (Meth)acrylsäureestern bevorzugt. Sehr gut geeignet sind auch Cellulosederivate, insbesondere Celluloseether und Celluloseester, wie Methylhydroxyethylcellulose, Methylhydroxypropylcellulose, Hydroxyethylcellulose oder Carboxymethylcellulose. Die Einsatzmenge der Schutzkolloide beträgt im allgemeinen 0,02 bis 1, vorzugsweise 0,05 bis 0,3 Gew.-%, bezogen auf die Wasserphase.

Das Gewichtsverhältnis wäßrige Phase/organische Phase liegt im Bereich von vorzugsweise 0,5 bis 20, insbesondere 0,75 bis 5.

Nach einer besonderen Ausführungsform der vorliegenden Erfindung wird die Polymerisation in Anwesenheit eines Puffersystem durchgeführt. Bevorzugt werden Puffersysteme, die den pH-Wert der Wasserphase bei Beginn der Polymerisation auf einen Wert zwischen 14 und 6, vorzugsweise zwischen 12 und 8 einstellen Unter diesen Bedingungen liegen Schutzkolloide mit Carbonsäuregruppen ganz oder teilweise als Salze vor. Auf diese Weise wird die Wirkung der Schutzkolloide günstig beeinflußt. Die Konzentration an Puffer in der Wasserphase beträgt vorzugsweise 0,5 bis 500, insbesondere 2,5 bis 100 mmol pro Liter wäßrige Phase.

Die organische Phase kann durch Rühren in der wäßrigen Phase verteilt werden, wobei die Teilchengröße der entstehenden Tröpfchen wesentlich von der Rührgeschwindigkeit abhängt. Wenn man Perlpolymerisate möglichst einheitlicher Teilchengröße (im allgemeinen "monodispers" genannt) wünscht, sind dafür geeignete Verfahren vorzuziehen: Der Monomerstrom kann zu diesem Zweck in die wäßrige Phase eingedüst werden, wobei durch schwingungsangeregten Strahlzerfall und/oder Mikroverkapselung der entstandenen Monomertröpfchen die Erzeugung von Tröpfchen gleichmäßiger Größe unter Vermeidung von Koaleszenz gewährleistet wird (EP-PS 46 535 und 51 210).

Falls man makroporöse Perlpolymerisate wünscht, kann man der Monomer/Vernetzer-Mischung Porogene zusetzen, wie sie beispielsweise bei Seidl et al., Adv. Polym. Sci., Vol. 5 (1967), S. 113 bis 213, beschrieben sind, z.B. aliphatische Kohlenwasserstoffe, Alkohole, Ester, Ether, Ketone, Trialkylamine, Nitroverbindungen, vorzugsweise Isododecan, Isodecan, Methylisobutylketon oder Methylisobutylcarbinol, in Mengen von 1 bis 150, vorzugsweise 40 bis 100 Gew.-%, insbesondere 50 bis 80 Gew.-%, bezogen auf die Summe von Monomer und Vernetzer.

Die Polymerisationstemperatur richtet sich nach der Zerfallstemperatur des eingesetzten Initiators. Sie liegt im allgemeinen zwischen 50 und 150°C, vorzugsweise zwischen 55 und 100°C. Die Polymerisation dauert 0,5 bis einige Stunden. Es hat sich bewahrt, ein Temperaturprogramm anzuwenden, bei dem die Polymerisation bei niedriger Temperatur, z.B. 60°C, begonnen und die Reaktionstemperatur mit fortschreitendem Polymerisationsumsatz gesteigert wird.

Die resultierenden Perlpolymerisate können als solche oder aber über eine durch eine sog. seed/feed-Verfahren zugängliche Zwischenstufe mit vergrößerter Teilchengröße der Funktionalisierung zugeführt werden. Ein seed/feed-Verfahren beinhaltet die Verfahrensschritte, das ursprünglich erhaltene Polymerisat ("seed") mit copolymerisierbaren Monomeren anzuquellen ("feed") und das in das Polymerisat eingedrungene Monomer zu polymerisieren. Geeignete seed/feed-Verfahren werden beispielsweise in den EP-PS 98 130 und 101 943 beschrieben.

Sulfoniermittel im Sinne der vorliegenden Erfindung umfassen Chlorsulfonsäure, Schwefelsäure und Schwefelsäure-Monohydrat. 90- bis 98 gew.-%ige Schwefelsäure ist ein bevorzugtes Sulfoniermittel.

Durch Variation der Schwefelsäurekonzentration läßt sich der Substitutionsgrad (SO₃H-Gruppen pro aromatischem Ring) des Polymerisats einstellen. Der durchschnittliche Substitutionsgrad der erfindungsgemäß hergestellten Kationenaustauscher beträgt vorzugsweise 0,6 bis 2, insbesondere 0,8 bis 1,8.

Vor der Sulfierung werden die Perlpolymerisate mit einem Quellmittel angequollen, um eine gleichmäßige Sulfierung aller Bereiche der Polymerisatperlen zu erreichen. Bevorzugte Quellmittel umfassen chlorierte aliphatische und aromatische Kohlenwasserstoffe wie Methylenchlorid, Dichlormethan und Chlorbenzol.

Ein anderer Weg, die Sulfierung zu erleichtern, besteht darin, solche Basispolymerisate zur Sulfierung einzusetzen, die 0,5 bis 20 Gew.-% Acrylnitril und/oder Methacrylnitril, bezogen auf die Summe von Monomer und Vernetzer, einpolymerisiert enthalten; vgl. DE-AS 1 227 431 und 233 143.

Erfindungsgemäß bevorzugt ist die Sulfonierung unter Inertgasatmosphäre, z.B. Stickstoffatmosphäre.

Vorzugsweise wird die Sulfierung bei Temperaturen von 125 bis 150, insbesondere von 130 bis 145°C durchgeführt.

Da sich die verwendeten Quellmittel nach beendeter Sulfierung durch Waschen mit Wasser nicht vollständig entfernen lassen, andererseits aber Quellmittel-haltige Ionenaustauscher für viele Zwecke (z.B. zur Aufbereitung von Lebensmitteln) unbrauchbar sind, wird man sie in der Regel nach der Sulfierung destillativ oder mit einem Gasstrom austreiben, gegebenenfalls mit Hilfe eines Inertgasstroms, z.B. eines Stickstoffstroms.

Um die Kationenaustauscher Sulfiermittel-frei zu erhalten, werden sie verschiedenen Wäschen unterworfen. Beispielsweise kann man sie mit Schwefelsäuren abnehmender Konzentration und zuletzt mit Wasser waschen. Die dann zunächst in der Wasserstoff-Form vorliegenden Kationenaustauscher können, falls erwünscht, durch Behandeln mit wäßrigen Salzlösungen in die entsprechenden Salz-Formen übergeführt werden. So liegen sie beispielsweise nach Behandlung mit wäßriger Kochsalz/Natriumhydroxid-Lösung in der Natriumform vor.

Die Erfindung betrifft bevorzugt
ein Verfahren zur Herstellung stark saurer Kationenaustauscher, wonach man die Sulfonierung in Gegenwart eines Quellmittels bei 125 bis 150, vorzugsweise 130 bis 145°C, unter Ausschluss von Sauerstoff durchführt.

Die erfindungsgemäß hergestellten Kationenaustauscher besitzen eine erhöhte Totalkapazität (Mol SO₃H pro l Ionenaustauscher).

Die erfindungsgemäß hergestellten Kationenaustauscher besitzen im allgemeinen mittlere Teilchengrößen von 200 bis 1200 µm. Die mittlere Teilchengröße ist der Durchmesser, unterhalb und oberhalb dessen jeweils 50 Gew.-% der Perlen liegen.

Die nach dem erfindungsgemäßen Verfahren hergestellten Kationenaustauscher sind weitgehend frei von Verunreinigungen, die ausbluten können; sie können durch eine relativ kurze Wäsche in eine Reinheitsstufe übergeführt werden, die nach unserer Erfahrung Kationenaustauscher des Standes der Technik auch nach langer Wäsche nicht erreichen.

Weiterer Gegenstand der Erfindung sind also Kationenaustauscher mit einem Leitfähigkeitsprofil von weniger als 50, vorzugsweise weniger als 40, insbesondere weniger als 30 µS/cm. Der Begriff "Leitfähigkeitsprofil" in diesem Zusammenhang bedeutet die elektrische Leitfähigkeit von Waschwasser, das nach folgendem Verfahren erhalten worden ist: 100 ml Kationenaustauscher, der mindestens 1 Monat frei von Antioxydantien gelagert worden ist, werden in Wasser suspendiert und in eine Glassäule (Länge 30 cm, Durchmesser 2 cm) eingeschlämmt. Heißes entionisiertes Wasser wird dann mit einer Geschwindigkeit von 0.2 Bettvolumina/h über die Säure filtriert; die Temperatur des einfließenden Wassers wird so eingestellt, daß das Eluat die Säule mit einer Temperatur von 70°C verläßt. 3 Bettvolumina Waschwasser werden verworfen; das unmittelbar danach austretende Eluat wird auf 20°C abgekühlt und seine elektrische Leitfähigkeit wird bei dieser Temperatur bestimmt.

Weiterer Gegenstand des Verfahrens ist die Verwendung der erfindungsgemäßen Kationenaustauscher als Katalysatoren für die verschiedensten chemischen Reaktionen. Beispiele solcher Reaktionen sind Alkylierungen, z.B. von Phenolen mit Alkenen wie die Umsetzung von Phenol und Nonen zu Nonylphenol, Veresterungen, z.B. von Carbonsäuren mit Alkoholen wie die Umsetzung von Acrylsäure mit Methanol zu Acrylsäuremethylester, Veresterungen von Estern mit anderen Alkoholen, Carbonsäuren oder Estern, z.B. die Umsetzung von Methylmethacrylat und Butanol zu Butylmethacrylat, Veretherungen, z.B. von Alkenen mit Alkoholen oder Wasser wie die Umsetzung von Methanol und Isobuten zu MTBE oder von Methanol und 2-Methyl-buten-2 zu TAME, Kondensationen, z.B. Ketone und Phenole wie Aceton und Phenol zu Bisphenol-A.

Die erfindungsgemäßen Kationenaustauscher eignen sich ebenso gut als Adsorberharze, z.B. zur Zuckerentfärbung oder zur Herstellung von Reinstwasser.

Eine weitere wichtige Verwendung ist der Einsatz als Kationenaustauscher für die Herstellung sehr reiner Produkte, z.B. für Lebensmittel und Getränke, insbesondere von Trinkwasser.

Die Prozentangaben der nachfolgenden Beispiele bedeuten jeweils Gewichtsprozente.

### Beispiele

### Herstellung gelförmiger Perlpolymerisate (unfunktionalisiert)

In einem Polymerisationsreaktor werden in 1830 ml entsalztem Wasser 3,7 g eines Schutzkolloids auf Cellulosebasis sowie 17 g Dinatriumhydrogenphosphat gelöst. Die wäßrige Lösung wird 8 Stunden bei Raumtemperatur gerührt. Anschließend gibt man 1000 g Monomermischung bestehend aus 936,5 g Styrol, 63,5 g technischem Divinylbenzol (63 %ig) und 7,4 g Dibenzoylperoxid (75 %ig) zu. Man rührt 6 Stunden bei 70°C und weitere 3 Stunden bei 90°C. Das erhaltene Perlpolymerisat wird mit Wasser gewaschen und anschließend bei 80°C im Trockenschrank getrocknet.
Ausbeute: 98,1 Gew.-%.

### Beispiel 1 (Vergleichsbeispiel)

### Sulfonierung des Perlpolymerisates unter Luft bei 120°C

In einem Reaktionsgefäß, das zur Luftatmosphäre einen offenen Zugang besitzt, werden 367,5 g 78 %ige Schwefelsäure bei Raumtemperatur vorgelegt Dazu gibt man 150 g Perlpolymerisat. Unter Rühren werden 37,5 ml 1,2-Dichlorethan dosiert und weitere 3 Stunden bei Raumtemperatur gerührt. Dann werden 783 g Schwefelsäure-Monohydrat zudosiert. Es wird auf 120°C erhitzt. Bereits während des Aufheizens destilliert Dichlorethan ab. Es wird weitere 4 Stunden bei 120°C gerührt. Nach 3,5-stündigem Rühren bei 120°C wird zur Entfernung noch vorhandener Dichlorethanreste 30 Minuten lang bei 120°C Luft durch die Suspension geblasen.

Die Suspension wird in eine Säule überführt und mit verschiedenen Schwefelsäuren abnehmender Konzentration und zuletzt mit Wasser von oben beaufschlagt und hydratisiert.
Ausbeute an Kationenaustauscher in der H-Form: 1050 ml
Totalkapazität 1,28 mol/l

### Beispiel 2

### Sulfonierung des Perlpolymerisates unter Luftausschluß bei 120°C

Alle Operationen werden unter Stickstoff (d.h. unter Luftausschluß) durchgeführt. In einem Reaktionsgefäß, das mit Stickstoff inertisiert ist, werden 367,5 g 78 %ige Schwefelsäure bei Raumtemperatur vorgelegt. Dazu gibt man 150 g Perlpolymerisat. Unter Rühren werden 37,5 ml 1,2-Dichlorethan dosiert und weitere 3 Stunden bei Raumtemperatur gerührt. Dann werden 783 g Schwefelsäure-Monohydrat zudosiert. Es wird auf 120°C erhitzt. Bereits während des Aufheizens destilliert Dichlorethan ab. Es wird weitere 4 Stunden bei 120°C gerührt. Nach 3,5-stündigem Rühren bei 120°C wird zur Entfernung noch vorhandener Dichlorethanreste 30 Minuten lang bei 120°C Stickstoff durch die Suspension geblasen.

Die Suspension wird in eine Säule überführt und mit verschiedenen Schwefelsäuren abnehmender Konzentration und zuletzt mit Wasser von oben beaufschlagt und hydratisiert.
Ausbeute an Kationenaustauscher in der H-Form: 990 ml
Totalkapazität: 1,37 mo/l

### Beispiel 3 (Vergleichsbeispiel)

### Sulfonierung des Perlpolymerisates unter Luft bei 130°C

In einem Reaktionsgefäß, das zur Luftatmosphäre einen offenen Zugang besitzt, werden 367,5 g 78 %ige Schwefelsäure bei Raumtemperatur vorgelegt. Dazu gibt man 150 g Perlpolymerisat. Unter Rühren werden 37,5 ml 1,2-Dichlorethan zudosiert und weitere 3 Stunden bei Raumtemperatur gerührt. Dann werden 783 g Schwefelsäure-Monohydrat zudosiert. Es wird auf 130°C erhitzt. Bereits während des Aufheizens destilliert Dichlorethan ab. Es wird weitere 4 Stunden bei 130°C gerührt. Nach 3,5-stündigem Rühren bei 130°C wird zur Entfernung noch vorhandener Dichlorethanreste 30 Minuten lang bei 130°C Luft durch die Suspension geblasen.

Die Suspension wird in eine Säule überführt und mit verschiedenen Schwefelsäuren abnehmender Konzentration und zuletzt mit Wasser von oben beaufschlagt und hydratisiert.
Ausbeute an Kationenaustauscher in der H-Form: 1050 ml
Totalkapazität: 1,30 mol/l

### Beispiel 4

### Sulfonierung des Perlpolymerisates unter Luftausschluß bei 130°C

Alle Operationen werden unter Stickstoff und (d.h. unter Luftausschluß) durchgeführt. In einem Reaktionsgefäß, das mit Stickstoff inertisiert ist, werden 367,5 g 78 %ige Schwefelsäure bei Raumtemperatur vorgelegt. Dazu gibt man 150 g Polymerisat. Unter Rühren werden 37,5 ml 1,2-Dichlorethan dosiert und weitere 3 Stunden bei Raumtemperatur gerührt. Dann werden 783 g Schwefelsäure-Monohydrat zudosiert. Es wird auf 130°C erhitzt. Bereits während des Aufheizens destilliert Dichlorethan ab. Es wird weitere 4 Stunden bei 130°C gerührt. Nach 3,5-stündigem Rühren bei 130°C wird zur Entfernung noch vorhandener Dichlorethanreste 30 Minuten lang bei 130°C Stickstoff durch die Suspension geblasen

Die Suspension wird in eine Säule überführt und mit verschiedenen Schwefelsäuren abnehmender Konzentration und zuletzt mit Wasser von oben beaufschlagt und hydratisiert.
Ausbeute an Kationenaustauscher in der H-Form: 1050 ml
Totalkapazität: 1,36 mol/l

### Beispiel 5 (Vergleichsbeispiel)

### Sulfonierung des Perlpolymerisates unter Luft bei 140°C

In einem Reaktionsgefäß, das zur Luftatmosphäre einen offenen Zugang besitzt, werden 367,5 g 78 %ige Schwefelsäure bei Raumtemperatur vorgelegt. Dazu gibt man 150 g Perlpolymerisat. Unter Rühren werden 37,5 ml 1,2-Dichlorethan zudosiert und weitere 3 Stunden bei Raumtemperatur gerührt. Dann werden 783 g Schwefelsäure-Monohydrat zudosiert. Es wird auf 140°C erhitzt. Bereits während des Aufheizens destilliert Dichlorethan ab. Es wird weitere 4 Stunden bei 140°C gerührt. Nach 3,5-stündigem Rühren bei 140°C wird zur Entfernung noch vorhandener Dichlorethanreste 30 Minuten lang bei 140°C Luft durch die Suspension geblasen.

Die Suspension wird in eine Säule überführt und mit verschiedenen Schwefelsäuren abnehmender Konzentration und zuletzt Wasser von oben beaufschlagt und hydratisiert.
Ausbeute an Kationenaustauscher in der H-Form: 1050 ml
Totalkapazität: 1,31 mol/l

### Beispiel 6

### Sulfonierung des Perlpolymerisates unter Luftausschluß bei 140°C

Alle Operationen werden unter Stickstoff (d.h. unter Luftausschluß) durchgeführt. In einem Reaktionsgefäß, das mit Stickstoff inertisiert, werden 367,5 g 78 %ige Schwefelsäure bei Raumtemperatur vorgelegt. Dazu gibt man 150 g Perlpolymerisat. Unter Rühren werden 37,5 ml 1,2-Dichlorethan dosiert und weiter 3 Stunden bei Raumtemperatur gerührt. Dann werden 783 g Schwefelsäure-Monohydrat zudosiert. Es wird auf 140°C erhitzt. Bereits während des Aufheizens destilliert Dichlorethan ab. Es wird weitere 4 Stunden bei 140°C gerührt. Nach 3,5-stundigem Rühren bei 140°C wird zur Entfernung noch vorhandener Dichlorethanreste 30 Minuten lang bei 140°C Stickstoff durch die Suspension geblasen.

Die Suspension wird in eine Säule überführt und mit verschiedenen Schwefelsäuren abnehmender Konzentration und zuletzt mit Wasser von oben beaufschlagt und hydratisiert.
Ausbeute an Kationenaustauscher in der H-Form: 1030 ml
Totalkapazität: 1,34 mol/l

| Beispiel | Sulfonierung unter Luftsauerstoff (A) bzw. Stickstoff (B) | Sulfoniertemperatur in °C | Ausbeute an Kationenaustauscher in der Wasserstoffform in ml | Totalkapazität in mol/l | mmol SO₃H-Gruppen im Kationenaustauscher pro Gramm hierzu eingesetztes Perlpolymerisat | **Kapazitätsausbeute in mmol** |
|---|---|---|---|---|---|---|
| 1 | A | 120 | 1050 | 1,28 | 8,96 | 1344 |
| 2 | B | 120 | 990 | 1,37 | 9,04 | 1356,3 |
| 3 | A | 130 | 1050 | 1,30 | 9,1 | 1365 |
| 4 | B | 130 | 1015 | 1,36 | 9,2 | 1380,4 |
| 5 | A | 140 | 1050 | 1,31 | 9,17 | 1375,5 |
| 6 | B | 140 | 1030 | 1,34 | 9,2 | 1380,5 |

Totalkapazität (TK):
Menge an SO₃H-Gruppen in mol pro Liter Kationenaustauscher in der H-Form
Kapazitätsausbeute:
Produkt aus TK und Volumenausbeute an Kationenaustauscher

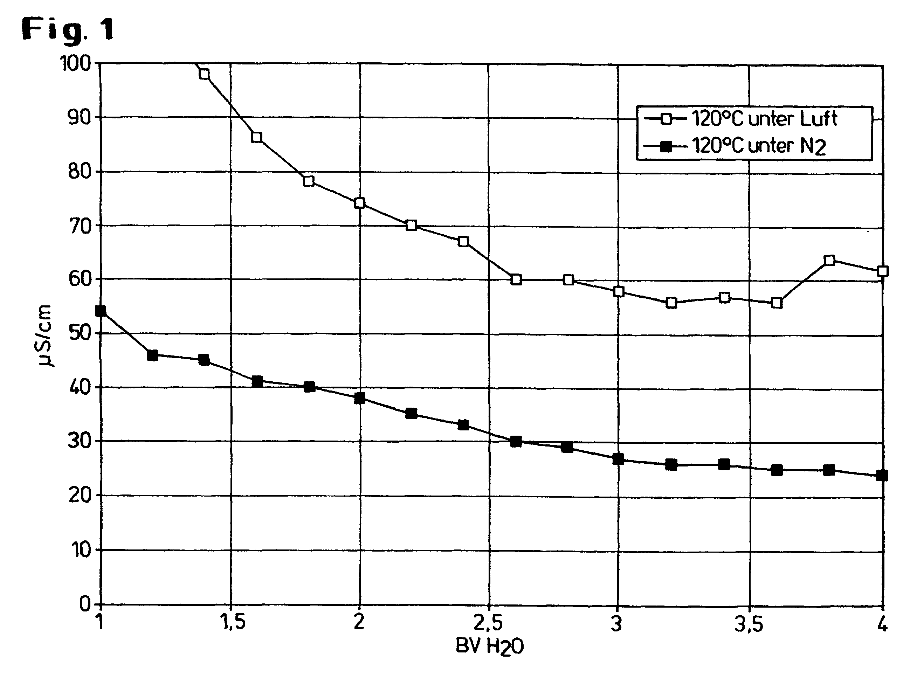

Abbildung 1 zeigt Leitfähigkeitsprofile von Kationenaustauschern, die in Gegenwart bzw. Abwesenheit von Luftsauerstoff hergestellt wurden.

Zur Ermittlung der Leitfähigkeitsprofile wird über die Kationenaustauscher Wasser filtriert und im Eluat die Leitfähigkeit in S/cm gemessen.

Abbildung 1 zeigt, daß die unter Stickstoff hergestellten Kationenaustauscher deutlich weniger Substanzen abgeben, die zur Leitfähigkeit beitragen, und damit ein wesentlich reineres Wasser abgeben.

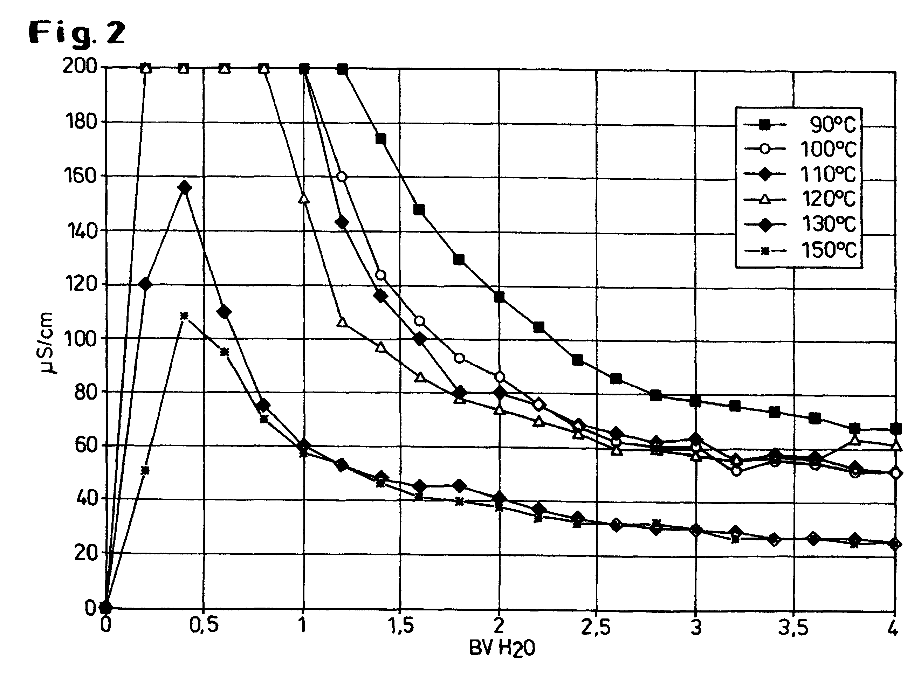

Abbildung 2 zeigt, daß die bei höherer Temperatur sulfonierten Produkte weniger Substanzen abgeben als bei niedriger Temperatur sulfonierten Produkte.

## Patentansprüche

1. Verfahren zur Herstellung stark saurer Kationenaustauscher mit einer mittleren Teilchengröße von 200 bis 1200 µm durch Sulfonierung vernetzter Styrolpolymerisate, **dadurch gekennzeichnet, dass** man die Sulfonierung in Anwesenheit eines Quellmittels mit Chlorsulfonsäure, Schwefelsäure oder Schwefelsäure-Monohydrat bei Temperaturen von 120 bis 200°C unter Luftausschluss durchführt.

2. Verfahren gemäß Anspruch 1, **dadurch gekennzeichnet, dass** als Quellmittel chlorierte aliphatische und aromatische Kohlenwasserstoffe eingesetzt werden.

3. Verfahren zur Herstellung stark sauer Kationenaustauscher gemäß der Ansprüche 1 bis 2, **dadurch gekennzeichnet, dass** Luftausschluss die Abwesenheit von Sauerstoff bedeutet.

4. Verfahren zur Herstellung stark saurer Kationenaustauscher gemäß der Ansprüche 1 bis 3, **dadurch gekennzeichnet, dass** der Luftausschluss durch Inertgas sichergestellt wird.

5. Verfahren gemäß der Ansprüche 1 bis 4, **dadurch gekennzeichnet, dass** die Sulfonierung bei Temperaturen von 125 bis 150°C durchgeführt wird.

6. Verfahren gemäß Ansprüche 1 bis 4, **dadurch gekennzeichnet, dass** die Sulfonierung bei Temperaturen von 130 bis 145°C durchgeführt wird.

7. Verfahren gemäß Anspruch 1, **dadurch gekennzeichnet, dass** die vernetzten Styrolpolymerisate mit Quellmittel angequollen, sulfoniert und nach der Sulfonierung das Quellmittel mit Inertgas ausgeblasen wird.

8. Verfahrem gemäß Anspruch 4, **dadurch gekennzeichnet, dass** als Inertgas Stickstoff eingesetzt wird.

9. Verfahren gemäß Ansprüche 1 bis 8, **dadurch gekennzeichnet, dass** vernetzte Styrolpolymerisate sulfoniert werden, die 0,5 bis 20 Gew.-% Acrylnitril und/oder Methacrylnitril, bezogen auf die Summe von Monomer und Vernetzter, einpolymerisiert enthalten.

10. Verfahren gemäß Ansprüche 1 bis 9, wonach man zur Sulfonierung Styrolpolymerisate einsetzt, die aus einem Basispolymerisat zwecks Teilchenvergrößerung mittels seed/feed-Verfahren erhalten worden sind.

11. Stark saure Kationenaustauscher mit einer mittleren Teilchengröße von 200 bis 1200 µm und mit einem Leitfähigkeitsprofil von weniger als 50 µS/cm hergestellt nach den Verfahren gemäß Ansprüche 1 bis 10.

12. Verwendung von Produkten, hergestellt nach den Ansprüchen 1 bis 10 als Kationenaustauscher, Katalysatoren oder Adsorberharze.

13. Verfahren zur Herstellung stark saurer Kationenaustauscher gemäß der Ansprüche 1 bis 10, **dadurch gekennzeichnet, dass** die Styrolpolymerisate durch Copolymerisation mit vernetzenden Monomeren vernetzt sind, die mehr als eine copolymerisierbare C=C-Doppelbindung(en) pro Molekül aufweisen.

14. Verfahren gemäß Anspruch 13, **dadurch gekennzeichnet, dass** als vernetzendes Monomer Divinylbenzol eingesetzt wird.

15. Verwendung der stark sauren Kationenaustauscher gemäß Anspruch 11 als Adsorberharze bei der Zuckerentfärbung oder zur Herstellung von Reinstwasser.

16. Verwendung der stark sauren Kationenaustauscher gemäß Anspruch 11 zur Herstellung sehr reiner Produkte für Lebensmittel, Getränke oder von Trinkwasser.

17. Verwendung der stark sauren Kationenaustauscher gemäß Anspruch 10 als Katalysatoren bei der Bisphenol-A-Herstellung aus Phenol und Aceton.

18. Verfahren zur Herstellung von Bisphenol-A aus Phenol und Aceton, **dadurch gekennzeichnet, dass** als Katalysatoren stark saure Kationenaustauscher mit einer mittleren Teilchengröße von 200 bis 1200 µm und hergestellt nach dem Verfahren gemäß Anspruch 1 eingesetzt werden.

## Claims

1. Process for the preparation of strongly acid cation exchangers having an average particle size of 200 to 1 200 µm by sulphonation of crosslinked styrene polymers, **characterized in that** the sulphonation is carried out with chlorosulphonic acid, sulphuric acid or sulphuric acid monohydrate at temperatures of 120 to 200°C in the absence of air and in the presence of a swelling agent.

2. Process according to Claim 1, **characterized in that** the swelling agent used is chlorinated aliphatic and aromatic hydrocarbons.

3. Process for the preparation of strongly acid cation exchangers according to Claims 1 to 2, **characterized in that** the absence of air means the absence of oxygen.

4. Process for the preparation of strongly acid cation exchangers according to Claims 1 to 3, **characterized in that** the absence of air is ensured by means of an inert gas.

5. Process according to Claims 1 to 4, **characterized in that** the sulphonation is carried out at temperatures from 125 to 150°C.

6. Process according to Claims 1 to 4, **characterized in that** the sulphonation is carried out at temperatures from 130 to 145°C.

7. Process according to Claim 1, **characterized in that** the crosslinked styrene polymers are swollen with swelling agent, sulphonated and, after the sulphonation, the swelling agent is blown out with an inert gas.

8. Process according to Claim 4, **characterized in that** the inert gas used is nitrogen.

9. Process according to Claims 1 to 8, **characterized in that** crosslinked styrene polymers which comprise 0.5 to 20% by weight of copolymerized acrylonitrile and/or methacrylonitrile, based on the sum of monomer and crosslinking agent, are sulphonated.

10. Process according to Claims 1 to 9, in which styrene polymers which have been obtained from a base polymer by means of a seed/feed process for the purpose of increasing the particle size are employed for the sulphonation.

11. Strongly acid cation exchangers having an average particle size of 200 to 1 200 µm and a conductivity profile of less than 50 µS/cm, prepared by the processes according to Claims 1 to 10.

12. Use of products prepared according to Claims 1 to 10 as cation exchangers, catalysts or adsorber resins.

13. Process for the preparation of strongly acid cation exchangers according to Claims 1 to 10, **characterized in that** the styrene polymers have been crosslinked by copolymerization with crosslinking monomers having more than one copolymerizable C=C double bond per molecule.

14. Process according to Claim 13, **characterized in that** the crosslinking monomer used is divinylbenzene.

15. Use of the strongly acid cation exchangers according to Claim 11 as adsorber resins in sugar decolourization or for preparing very pure water.

16. Use of the strongly acid cation exchangers according to Claim 11 for preparing very pure products for foods, beverages or for preparing drinking water.

17. Use of the strongly acid cation exchangers according to Claim 10 as catalysts in the bisphenol A synthesis from phenol and acetone.

18. Process for preparing bisphenol A from phenol and acetone, **characterized in that** the catalysts used are strongly acid cation exchangers having an average particle size of 200 to 1 200 µm and prepared by the process according to Claim 1.

## Revendications

1. Procédé de préparation d'échangeurs de cations fortement acides avec une grosseur moyenne de particules de 200 à 1 200 µm par sulfonation de polymères de styrène réticulés, **caractérisé en ce qu'**on effectue la sulfonation en présence d'un agent gonflant avec de l'acide chlorosulfonique, de l'acide sulfurique ou du monohydrate d'acide sulfurique à des températures de 120 à 200°C sous exclusion d'air.

2. Procédé selon la revendication 1, **caractérisé en ce qu'**on utilise comme agent gonflant des hydrocarbures chlorés aliphatiques et aromatiques.

3. Procédé de préparation d'échangeurs de cations fortement acides selon les revendications 1 à 2, **caractérisé en ce qu'**exclusion d'air signifie absence d'oxygène.

4. Procédé de préparation d'échangeurs de cations fortement acides selon les revendications 1 à 3, **caractérisé en ce que** l'exclusion d'air est assurée par un gaz inerte.

5. Procédé selon les revendications 1 à 4, **caractérisé en ce que** la sulfonation s'effectue à des températures de 125 à 150°C.

6. Procédé selon les revendications 1 à 4, **caractérisé en ce que** la sulfonation s'effectue à des températures de 130 à 145°C.

7. Procédé selon la revendication 1, **caractérisé en ce que** les polymères de styrène réticulés sont gonflés avec un agent gonflant, sulfonés et, après la sulfonation, l'agent gonflant est chassé à l'aide d'un gaz inerte.

8. Procédé selon la revendication 4, **caractérisé en ce qu'**on utilise comme gaz inerte de l'azote.

9. Procédé selon les revendications 1 à 8, **caractérisé en ce que** l'on soumet à sulfonation des polymères de styrène réticulés qui contiennent, incorporés dans le polymère 0,5 à 20% en poids d'acrylonitrile et/ou de méthacrylonitrile, sur base de la somme de monomère et d'agent de réticulation.

10. Procédé selon les revendications 1 à 9, selon lequel on utilise pour la sulfonation des polymères de styrène qu'on obtient à partir d'un polymère de base dans un but d'agrandissement des particules au moyen d'un procédé de seed/feed.

11. Echangeurs de cations fortement acides avec une grosseur moyenne de particules de 200 à 1 200 µm et avec un profil de conductivité inférieur à 50 µS/cm, préparés selon les procédés selon les revendications 1 à 10.

12. Utilisation de produits préparés selon les revendications 1 à 10 comme échangeurs de cations, catalyseurs et résines d'adsorbant.

13. Procédé de préparation d'échangeurs de cations fortement acides selon les revendications 1 à 10, **caractérisé en ce que** les polymères de styrène sont réticulés par copolymérisation avec des monomères réticulants qui présentent par molécule plus d'une double liaison C=C apte à être copolymérisée.

14. Procédé selon la revendication 13, **caractérisé en ce qu'**on utilise comme monomère réticulant du divinylbenzène.

15. Utilisation des échangeurs de cations fortement acides selon la revendication 11 comme résine d'adsorbant pour la décoloration de sucre ou pour la préparation d'eau extra pure.

16. Utilisation des échangeurs de cations fortement acides selon la revendication 11 pour la préparation de produits très purs pour des aliments, des boissons ou d'eau potable.

17. Utilisation des échangeurs de cations fortement acides selon la revendication 10 comme catalyseurs lors de la préparation de bisphénol-A à partir de phénol et d'acétone.

18. Procédé de préparation de bisphénol-A à partir de phénol et d'acétone, **caractérisé en ce qu'**on utilise comme catalyseurs des échangeurs de cations fortement acides avec une grosseur moyenne de particule de 200 à 1 200 µm et préparés d'après le procédé selon la revendication 1.
